# EUROPÄISCHE PATENTSCHRIFT

(11) **EP 0 701 308 B1**
(45) Veröffentlichungstag und Bekanntmachung des Hinweises auf die Patenterteilung: **11.02.1998**
(21) Anmeldenummer: 95111641.7
(22) Anmeldetag: 25.07.1995
(51) Int. Cl.: H01S 3/06, H04B 10/17, H04B 10/213

(54) **Vorrichtung zum Beschalten einer verstärkenden Faser**
Circuit device for an amplifying fibre
Circuit pour une fibre amplificatrice

(30) Priorität: 27.08.1994 DE 4430512
(43) Veröffentlichungstag der Anmeldung: 13.03.1996
(73) Patentinhaber: ROBERT BOSCH GMBH, 70442 Stuttgart (DE)
(72) Erfinder: Lausen, Hans, D-64295 Darmstadt (DE); Bersiner, Lutz, Dr., D-64625 Bensheim (DE); Klein, Thomas, Dr., D-66571 Eppelborn (DE)

(56) Entgegenhaltungen:
- PATENT ABSTRACTS OF JAPAN vol. 015 no. 234 (P-1215) ,14.Juni 1991 & JP-A-03 071115 (NIPPON TELEGR & TELEPH CORP) 26.März 1991,
- PATENT ABSTRACTS OF JAPAN vol. 018 no. 022 (E-1490) ,13.Januar 1994 & JP-A-05 259562 (NEC CORP) 8.Oktober 1993,
- JOURNAL OF LIGHTWAVE TECHNOLOGY, Bd. 10, Nr. 9, 1.September 1992 Seiten 1314-1322, XP 000399611 WU T -H ET AL 'A NOVEL PASSIVE PROTECTED SONET BIDIRECTIONAL SELF-HEALING RING ARCHITECTURE'
- PATENT ABSTRACTS OF JAPAN vol. 012 no. 500 (E-699) ,27.Dezember 1988 & JP-A-63 211931 (FUJITSU LTD) 5.September 1988,
- PATENT ABSTRACTS OF JAPAN vol. 017 no. 129 (P-1503) ,18.März 1993 & JP-A-04 308820 (FURUKAWA ELECTRIC CO LTD:THE) 30.Oktober 1992,
- LASERS AND ELECTRO - OPTICS SOCIETY ANNUAL MEETING CONFERENCE PROCEEDINGS. (LEOS), BOSTON, NOV. 4 - 9, 1990, Bd. 2, 4.November 1990 INSTITUTE OF ELECTRICAL AND ELECTRONICS ENGINEERS, Seiten 250-254, XP 000216901 EICHEN E ET AL 'OPTICAL AMPLIFIERS FOR PHOTONIC SWITCHING'
- ELECTRONICS LETTERS, Bd. 29, Nr. 3, 4.Februar 1993 Seiten 255-256, XP 000336779 HIRST I J ET AL 'PERFORMANCE MONITORING OF LONG CHAINS OF OPTICAL AMPLIFIERS'

## Beschreibung

### Stand der Technik

Die Erfindung geht aus von einer Vorrichtung zum Beschalten einer verstärkenden Faser nach der Gattung des Hauptanspruchs. Es ist schon eine Vorrichtung zum Beschalten einer verstärkenden Faser von Bambach, et al. "DIAMANT - an economic solution for the introduction of digital transmission of analog and digital audio and video signals", FITCE, European Tele Communications Days 1993, Antwerpen 29.8.1993 bis 4.9.1993, bekannt, bei der bis zu vier diskrete Schalter angeordnet sind, die dafür sorgen, daß eine verstärkende Faser, die in ein Ringsystem eingebracht ist, unabhängig von der Übertragungsrichtung der optischen Signale immer in der vorgegebenen Verstärkungsrichtung betrieben wird. Die Verwendung von vier optischen Schaltern erfordert einen verhältnismäßig hohen Schaltungsaufwand. Bei Verwendung einer doppelten Ringleitung ist entweder nur ein einziger optischer Schalter nötig, wobei für jede Ringleitung, die mit einer Übertragungsrichtung belegt ist, eine verstärkende optische Faser angeordnet ist, oder es sind zwei diskrete Schalter erforderlich. Die verstärkende Faser und ein angeschlossener Pumplaser stellen einen Faserverstärker dar. Der Faserverstärker weist einen Richtkoppler auf, der zur Ein- bzw. Auskopplung von Signalen für ein optisches Netz verwendet wird.

Eine Vorrichtung gemäß dem Oberbegriff von Anspruch 1 ist in Lasers and Electro-optics Society Annual Meeting Conference Proceedings, Boston, Nov. 4-9, 1990, Bd. 2, Seiten 250-254 offenbart.

### Vorteile der Erfindung

Die erfindungsgemäße Vorrichtung mit den Merkmalen des unabhängigen Anspruchs 1 hat demgegenüber den Vorteil, daß die optischen Leitungen und die verstärkende Faser an einer integrierten optischen Schaltung angeschlossen sind und der optische Richtkoppler auf der integrierten optischen Schaltung integriert ist. Durch die Integration des Richtkopplers wird die Vorrichtung verkleinert. Die Verwendung einer integrierten optischen Schaltung für die Beschaltung der verstärkenden Faser führt zu einer kostengünstigen Auszuführung der Beschaltung.

Durch die in den Unteransprüchen aufgeführten Maßnahmen sind vorteilhafte Weiterbildungen und Verbesserungen der im Anspruch 1 angegebenen Vorrichtung möglich. Durch die Integration der zur Umschaltung der Übertragungsrichtung notwendigen Schalter wird erreicht, daß die Vorrichtung noch kompakter und noch kostengünstiger auszuführen ist.

Besonders vorteilhaft ist es, als Schalter einen Zwei-mal-Zwei-Schalter zu integrieren. Auf diese Weise werden die Funktionen von vier diskreten Schaltern in Form eines einzigen Bauelements dargestellt. Dies führt zu einer Kostenreduzierung und einer weiteren Verkleinerung der Baugröße.

Weiterhin ist es vorteilhaft, den Faserverstärker mit einem integrierten Richtkoppler zu verbinden und auf diese Weise eine Auskopplung der Daten aus dem Ringsystem herzustellen.

Auf diese Weise wird die Auskopplung erreicht, ohne die integrierte optische Schaltung zu vergrößern. Zugleich wird die Ankopplung eines Datenausganges kostengünstig dargestellt.

Eine vorteilhafte Weiterbildung der erfindungsgemäßen Vorrichtung wird erreicht, indem als Schalter ein Ein-mal-Zwei-Schalter und ein Zwei-mal-Ein-Schalter integriert sind, über die zwei Eingangs- und zwei Ausgangsleitungen mit dem optischen Faserverstärker verbunden sind.

Eine weitere Ausbildung der erfindungsgemäßen Vorrichtung wird dadurch erreicht, daß zwei zusätzliche Ein-mal-Zwei-Schalter angeordnet sind, die eine Eingangs- und eine Ausgangsleitung mit den zwei Zwei-mal-Eins-Schaltern verbinden.

Eine weitere vorteilhafte Ausbildung der Vorrichtung besteht darin, zwei Eingangs- und zwei Ausgangsleitungen über zwei Zwei-mal-Zwei-Schalter mit den zwei Zwei-mal-Eins-Schaltern zu verbinden. Auf diese Weise werden die verschiedensten Schaltkombinationen der Eingangsleitungen und Ausgangsleitungen ermöglicht. Damit können die optischen Signale auf einer Vielzahl von Varianten der integrierten optischen Schaltung zugeführt und von der integrierten optischen Schaltung abgeführt werden und trotzdem ist auf einfache Weise eine Verstärkung und Abkopplung der Signale möglich.

### Zeichnung

Ausführungsbeispiele der Erfindung sind in der Zeichnung dargestellt und in der nachfolgenden Beschreibung näher erläutert. Es zeigen Figur 1 ein Faserringsystem, Figur 2 eine integrierte optische Schaltung mit einem Zwei-mal-Eins-Schalter und einem Eins-mal-Zwei-Schalter, Figur 3 eine integrierte otische Schaltung mit einem Zwei-mal-Eins-Ausgangsschalter, Figur 4 eine integrierte optische Schaltung mit vier Zwei-mal-Eins-Schaltern, Figur 5 eine integrierte optische Schaltung mit einem Zwei-mal-Zwei-Schalter, Figur 6 eine integrierte optische Schaltung mit zwei Zwei-mal-Zwei-Schaltern und zwei Zwei-mal-Eins-Schaltern und Figur 7 eine eine integrierte optische Schaltung 8 mit Isolatoren.

### Beschreibung der Ausführungsbeispiele

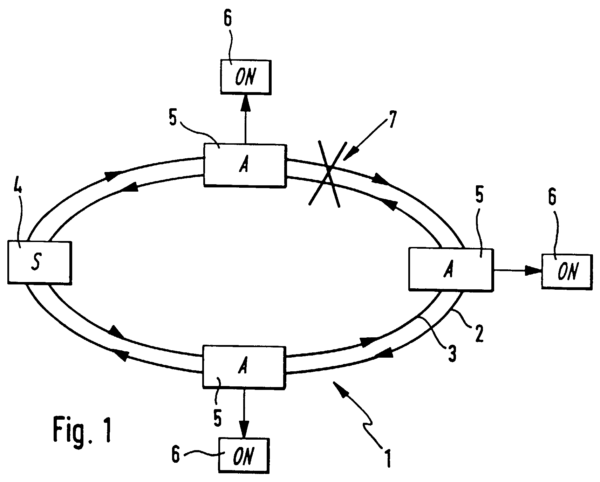

Figur 1 zeigt ein Faserringsystem, das einen Sender 4 aufweist, der über zwei Ringleitungen 2, 3 mit drei Abzweigungspunkten 5 verbunden ist. Die Ringleitungen 2,3 können durch ein und dieselbe Faser realisiert sein. Die erste Ringleitung 2 überträgt Daten in Form von optischen Signalen im Uhrzeigersinn. Die Signale werden dabei vom Sender 4 im Uhrzeigersinn ausgesandt und über die drei Abzweigungspunkte 5 bis zum Sender 4 durchgeschleift. Zusätzlich kann der Sender 4 die Signale auch entgegen dem Uhrzeigersinn über die zweite Ringleitung 3 senden. Auch in diesem Fall werden die Signale über die drei Abzweigungspunkte 5 durchgeschleift und an den Sender 4 zurückgeführt. Die Abzweigungspunkte 5 verstärken mittels eines gerichteten Faserverstärkers die Signale und duplizieren die über die Ringleitung 2,3 übertragenen Signale mittels eines optischen Richtkopplers und geben diese an ein optisches Netzwerk 6 weiter. Ein optisches Netzwerk 6 besteht zum Beispiel aus einer Vielzahl von Empfangsgeräten wie zum Beispiel Fernsehgeräten oder Radiogeräten.

Tritt nun in der Ringleitung 2,3 eine Unterbrechung 7 auf, so empfängt der Sender 4 das von ihm ausgesandte Signal nicht mehr. Hierdurch wird der Sender 4 dazu veranlaßt in beiden Richtungen zu senden, falls der Sender nicht schon in beiden Richtungen sendet. Es ist dafür zu sorgen, daß in den Abzweigungspunkten 5, denen nun die Daten aus einer anderen Richtung zugeführt werden, eine Umschaltung der Schalter vorgenommen wird, so daß den gerichteten Faserverstärkern der Abzweigungspunkte 5 in der vorgegebenen Richtung die Signale zugeführt werden.

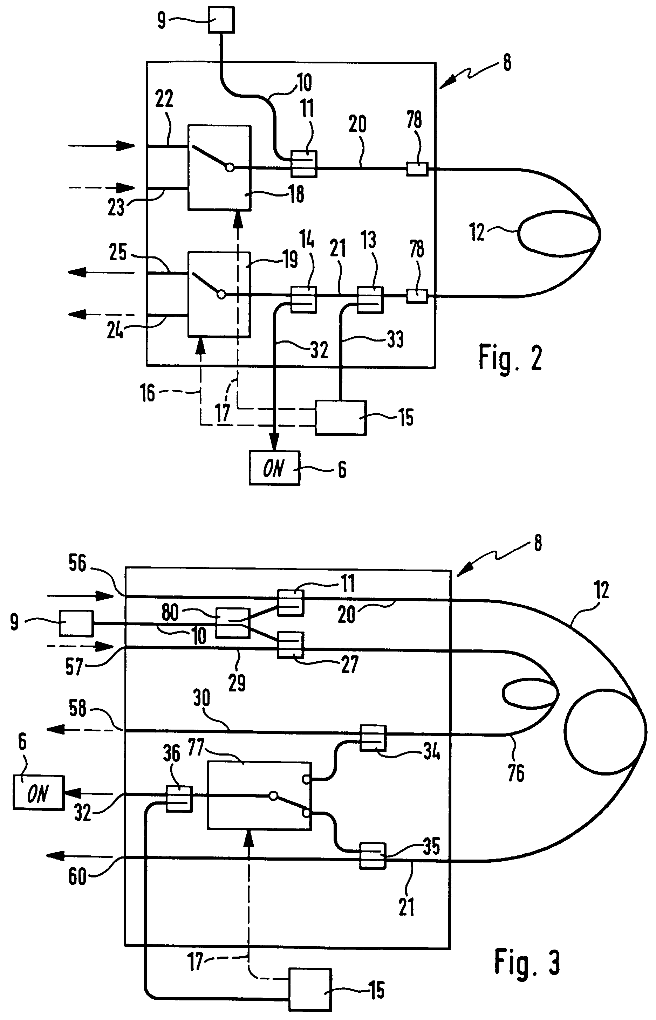

Figur 2 zeigt eine integrierte optische Schaltung 8 in Form eines integrierten Chips, der als integrierte Wellenleiter eine erste Eingangsleitung 22 und eine zweite Eingangsleitung 23 aufweist, die zu zwei Eingängen eines ersten Schalters 18 geführt sind, der als Zwei-mal-Eins-Schalter ausgeführt ist. An die erste und zweite Eingangsleitung 22,23 sind zwei optische Leitungen angekoppelt, die z.B. durch Ringleitungen 2,3 dargestellt werden. Die optischen Leitungen sind an entsprechend ausgebildete Anschlüsse der integrierten optischen Schaltung 8 angekoppelt.

Integrierte optische Schaltungen sind bekannt und werden z.B. in Form eines Halbleiterchips mit integrierten optischen Wellenleitern oder mithilfe einer Abformtechnik in einem abformbaren Material hergestellt, wie z.B. in der noch nicht veröffentlichten Patentanmeldung DE-OS 4401219 beschrieben ist.

Ein Ausgang des ersten Schalters 18 ist über einen ersten Eingangslichtleiter 20 mit einer ersten verstärkenden Faser 12, insbesondere mit einer mit Erbium dotierten Faser, verbunden. Das zweite Ende der ersten Faser 12 ist mit einem ersten Ausgangslichtleiter 21 verbunden, der zu einem Eingang eines zweiten Schalter 19 geführt, der als Ein-mal-Zwei-Schalter ausgeführt ist. Die zwei Ausgänge des zweiten Schalters 19 sind mit einer ersten Ausgangsleitung 24 und mit einer zweiten Ausgangsleitung 25 verbunden. An die erste und die zweite Ausgangsleitung 24,25 sind optische Leitungen z.B. Ringleitungen 2,3 angekoppelt. Die optischen Leitungen sind an entsprechend ausgebildete Anschlüsse der inttegrierten optischen Schaltung angeschlossen.

Die erste verstärkende Faser 12 ist nicht in die integrierte optische Schaltung 8 integriert, sondern über Anschlüsse an optisch angekoppelt. Ein Pumplaser 9 ist ebenfalls an die integrierte optische Schaltung 8 angeschlossen und über einen ersten Lichtleiter 10 an einen ersten wellenlängenselektiven Richtkoppler 11 geführt. Der erste Richtkoppler 11 ist an den ersten Eingangslichtleiter 20 in der Weise angekoppelt, daß die vom Pumplaser 9 abgegebene Lichtleistung an die erste verstärkende Faser 12 geführt wird.

An den ersten Ausgangslichtleiter 21 ist ein zweiter Richtkoppler 13 angeschlossen, der über eine Ausgangslichtleitung 33 mit einer an die integrierte optische Schaltung 8 angeschlossenen Steuereinheit 15 verbunden ist. Ein dritter Richtkoppler 14 ist ebenfalls an den ersten Ausgangslichtleiter 21 angeschlossen und über eine vierte Ausgangslichtleitung 32 mit einem externen optischen Netzwerk 6 verbunden. Die Steuereinheit 15 ist über eine erste Steuerleitung 16 mit dem zweiten Schalter 19 und über eine zweite Steuerleitung 17 mit dem ersten Schalter 18 verbunden. Der Pumplaser 9, das optische Netzwerk 6, die optischen Leitungen und die Steuereinheit 15 sind an die integrierte optische Schaltung 8 optisch angekoppelt. Die optischen Leitungen sind in Figur 2 in Form von Pfeilen schematisch dargestellt.

Vorzugsweise wird eine Anpassung der Felder der verwendeten Single-Mode-Wellenleiter mit unterschiedlichem Kerndurchmessern vorgenommen. In diesem Ausführungsbeispiel ist die verstärkende Faser 12 an die Wellenleiter der integrierten optischen Schaltung 8 über integrierte Taper 78 zur Erzeugung eines adiabatischen Überganges angepaßt. Auf diese Weise wird der Verlust an Lichtleistung beim Übergang zwischen Wellenleitern mit unterschiedlichen Feldverteilungen minimiert. Taper sind z.B. aus K.J.Ebeling, "Integrierte Optik", Springer Verlag Berlin, 1989 S. 106ff. bekannt.

Die Anordnung nach Figur 2 funktioniert wie folgt:

Über die erste Eingangsleitung 22 wird ein Lichtsignal über den ersten Schalter 18 und den ersten Eingangslichtleiter 20 an die verstärkende Faser 12 geführt. Die verstärkende Faser 12 wird vom Pumplaser 9 mit Pumpenergie versorgt, so daß das zugeführte Lichtsignal verstärkt wird. Das verstärkte Lichtsignal wird von der verstärkenden Faser 12 über den zweiten Schalter 19 an die zweite Ausgangsleitung 25 weitergegeben. Zusätzlich wird die verstärkte Lichtleistung über den dritten optischen Richtkoppler 14 an das optische Netzwerk 6 weitergegeben. Der Steuereinheit 15 wird über die fünfte Ausgangslichtleitung 33 ebenfalls ein von dem verstärkten Lichtsignal abhängendes Lichtsignal zugeführt. Die Steuereinheit 15 überprüft, ob ein Lichtsignal von der ersten Faser 12 abgegeben wird. Ist dies der Fall, so bleibt die Stellung des ersten und zweiten Schalters 18, 19 unverändert. Ergibt die Überwachung in der Steuereinheit 15, daß von der ersten verstärkenden Faser 12 kein Lichtsignal abgegeben wird, so wird der erste Schalter 18 auf die zweite Eingangsleitung 23 und der zweite Schalter 19 auf die erste Ausgangsleitung 24 umgeschaltet. Auf diese Weise wird bei einem Ausfall der ersten Eingangsleitung 22 erreicht, daß auf die zweite Eingangsleitung 23 umgeschaltet wird. Ebenso wird von der zweiten Ausgangsleitung 25 auf die erste Ausgangsleitung 24 umgeschaltet. Somit wird sichergestellt, daß unabhängig von der benutzten Eingangsleitung die erste verstärkende Faser 12 der erste Richtkoppler 11, der zweite Richtkoppler 13 und der dritte Richtkoppler 14 in der vorgegebenen Richtung mit Lichtsignalen versorgt werden.

Optische Faserverstärker mit den dazugehörenden Richtkopplern sind bereits bekannt und zum Beispiel in dem Prospekt, "Faserverstärker OFA 151 AB", Nr. 018517, 03/94 von ANT, Bosch Telecom beschrieben.

Ebenso sind optische Schalter in der Funktion als Eins-mal-Zwei, Zwei-mal-Eins und Zwei-mal-Zwei bekannt. Bei T.K. Gustafson, P.W. Smith, "Photonic Switching", Springer 1987, S. 95ff. ist zum Beispiel ein Zwei-mal-Zwei optischer Schalter beschrieben.

Figur 3 zeigt eine integrierte optische Schaltung 8, die eine erste und eine zweite verstärkende Faser 12, 76 aufweist. Ein dritter Eingang 56 der integrierten optischen Schaltung 8 ist mit dem ersten Eingangslichtleiter 20 verbunden, der an einem Ende der ersten verstärkenden Faser 12 angeschlossen ist. Das zweite Ende der ersten verstärkenden Faser 12 ist mit dem ersten Ausgangslichtleiter 21, der zu einem fünften Ausgang 60 geführt ist, verbunden. Ein vierter Eingang 57 ist an einen dritten Eingangslichtleiter 29 angeschlossen, der mit der zweiten verstärkenden Faser 76 verbunden ist.

Der Ausgang der zweiten verstärkenden Faser 76 ist an einen zweiten Ausgangslichtleiter 30 angeschlossen, der mit einem dritten Ausgang 58 verbunden ist. Der Pumplaser 9 ist über einen ersten Lichtleiter 10 und einem Verteilkoppler 80 an einen ersten Richtkoppler 11 und an einen fünften Richtkoppler 27 angeschlossen. Der erste Richtkoppler 11 ist an den ersten Eingangslichtleiter 20 und der fünfte Richtkoppler 27 ist an den dritten Eingangslichtleiter 29 angekoppelt. Ein sechster Richtkoppler 34 ist an den zweiten Ausgangslichtleiter 30 angekoppelt und mit einem ersten Eingang eines zwölften Zwei-mal-Eins-Schalters 77 verbunden.

Ein siebter Richtkoppler 35 ist an den ersten Eingangslichtleiter 21 angekoppelt und an einen zweiten Eingang des zwölften Schalters 77 angeschlossen. Der Ausgang des zwölften Schalters 77 ist über eine vierte Ausgangslichtleitung 32 mit einem optischen Netzwerk 6 verbunden. Ein achter Richtkoppler 36 ist an den vierten Ausgangslichtleiter 32 angeschlossen und mit einer Steuereinheit 15 verbunden. Die Steuereinheit 15 ist mit einer zweiten Steuerleitung 17 an den zwölften Schalter 77 angeschlossen. An den dritten und vierten Eingang 56,57 und an den dritten und fünften Ausgang 57,60 sind optische Leiter angeschlossen, die z.B. als Ringleitungen ausgebildet sind. In der Figur 3 sind die optischen Leiter schematisch als Pfeile dargestellt.

Die Anordnung nach Figur 3 funktioniert wie folgt:

Über den dritten Eingang 56 wird ein Lichtsignal an die erste Faser 12 geleitet, das vom Pumplaser 9 verstärkt wird und an dem fünften Ausgang 60 ausgegeben wird, wobei eine Abkopplung des Ausgangssignals über den zwölften Schalter 77 an das optische Netzwerk 6 erfolgt. Stellt nun die Steuereinheit 15 fest, daß am Ausgang des zwölften Schalters 77 kein Lichtsignal ausgegeben wird, so wird der Eingang des zwölften Schalters 77 auf den Ausgang der zweiten Faser 76 umgeschaltet. Auf diese Weise wird erreicht, daß, wenn über den dritten Eingang 56 kein Lichtsignal mehr zugeführt wird und die Zufuhr des Lichtsignals über den vierten Eingang 57 erfolgt, dann eine Abkopplung des Lichtsignals auf die zweite Faser 76 umgeschaltet wird und somit das optische Netzwerk 6 weiterhin mit Lichtsignalen versorgt wird.

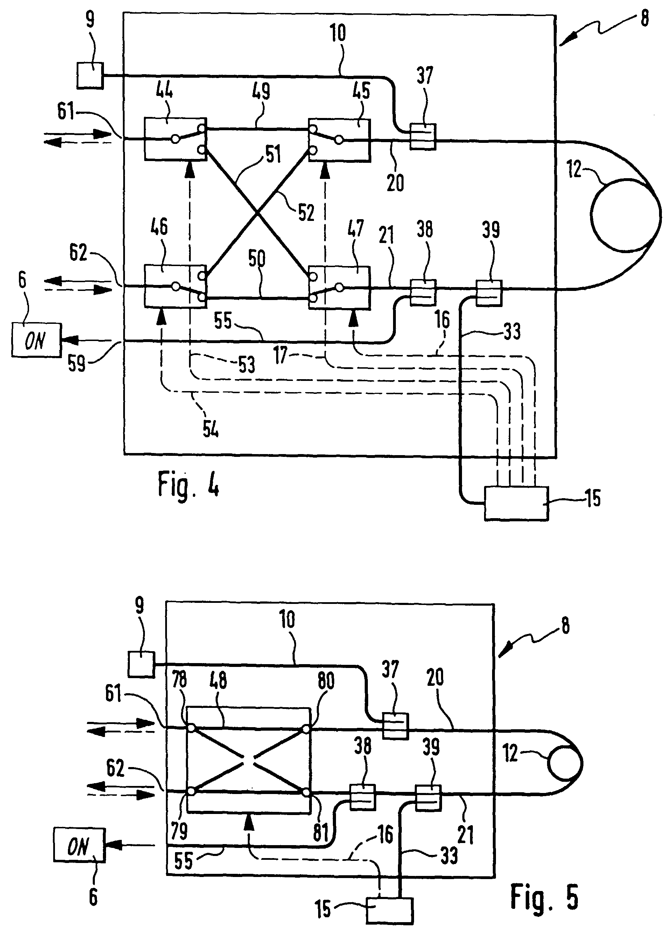

Figur 4 zeigt eine integrierte optische Schaltung 8 mit vier Schaltern 44, 45, 46, 47 und einer ersten verstärkenden Faser 12. Ein erster Anschluß 61 ist mit einem Eingang eines dritten Schalters 44 verbunden. Der dritte Schalter 44 ist je nach Betriebsrichtung als Ein-mal-Zwei-Schalter oder als Zwei-mal-Ein-Schalter ausgebildet. Ein Ausgang des dritten Schalters 44 ist über eine erste Verbindungsleitung 49 mit einem Eingang eines vierten Schalters 45 verbunden. Der vierte Schalter 45 ist als Zwei-mal-Ein-Schalter ausgebildet. Der Ausgang des vierten Schalters 45 ist über einen ersten Eingangslichtleiter 20 mit der ersten verstärkenden Faser 12 verbunden. Ein Pumplaser 9 ist über einen ersten Lichtleiter 10 an einen neunten Richtkoppler 37 angeschlossen, der an den ersten Eingangslichtleiter 20 angekoppelt ist. Der Ausgang der ersten verstärkenden Faser 12 ist an einen ersten Ausgangslichtleiter 21 angeschlossen, der mit einem Eingang eines sechsten Schalters 47 verbunden ist. Der sechste Schalter 47 ist als Ein-mal-Zwei-Schalter ausgebildet.

Ein elfter Richtkoppler 39 ist an den ersten Ausgangslichtleiter 21 angekoppelt und über eine fünfte Ausgangslichtleitung 33 mit einer Steuereinheit 15 verbunden. Ein zehnter Richtkoppler 38 ist ebenfalls an den ersten Ausgangslichtleiter 21 angekoppelt und über eine fünfte Ausgangsleitung 55 mit einem optischen Netzwerk 6 verbunden. Ein erster Ausgang des sechsten Schalters 47 ist über eine zweite optische Verbindungsleitung 50 mit einem ersten Eingang eines fünften Schalters 46 verbunden. Der fünfte Schalter 46 ist je nach Betriebsrichtung als Zwei-mal-Eins-Schalter oder als Eins-mal-Zwei-Schalter ausgebildet. Der Ausgang des fünften Schalters 46 ist mit einem zweiten Anschluß 62 verbunden. Ein zweiter Eingang des fünften Schalters 46 ist über eine vierte optische Verbindungsleitung 52 mit einem zweiten Eingang des vierten Schalters 45 verbunden. Ein zweiter Ausgang des dritten Schalters 44 ist über eine dritte optische Verbindungsleitung 51 mit einem zweiten Ausgang des sechsten Schalters 47 verbunden. Die Steuereinheit 15 ist über eine vierte Steuerleitung 54 mit dem fünften Schalter 46, über eine dritte Steuerleitung 53 mit dem dritten Schalter 44, über eine zweite Steuerleitung 17 mit dem vierten Schalter 45 und über eine erste Steuerleitung 16 mit dem sechsten Schalter 47 verbunden. An dem ersten und dem zweiten Anschluß 61,62 sind optische Leitungen, z.B. Ringleitungen, angeschlossen.

Die Anordnung nach Figur 4 funktioniert wie folgt:

Werden über den ersten Anschluß 61 Lichtsignale an die integrierte optische Schaltung 8 geführt, so wird das zugeführte Lichtsignal über den dritten Schalter 44 und den vierten Schalter 45 und über den ersten Eingangslichtleiter 20 an die erste Faser 12 geführt. Der Pumplaser 9 verstärkt das zugeführte Lichtsignal in der ersten Faser 12. Die erste Faser 12 gibt ein verstärktes Lichtsignal über den sechsten Schalter 47 und den fünften Schalter 46 an den zweiten Anschluß 62. Zugleich wird über den zehnten Richtkoppler 38 das verstärkte Lichtsignal der ersten Faser 12 an das optische Netzwerk 6 ausgegeben.

Die Steuereinheit 15 überwacht den Ausgang der ersten Faser 12. Ergibt die Überwachung der ersten Faser 12, daß kein Lichtsignal ausgegeben wird, so werden der dritte Schalter 44, der vierte Schalter 45, der fünfte Schalter 46 und der siebte Schalter 48 so umgeschaltet, daß Lichtsignale, die über den zweiten Anschluß 62 an die integrierte optische Schaltung 8 geführt werden, über den fünften Schalter 46 und den vierten Schalter 45 an den ersten Eingangslichtleiter 20 geführt werden und daß von der ersten Faser 12 verstärkte Lichtsignale über den sechsten Schalter 47 und den dritten Schalter 44 an den ersten Anschluß 61 ausgegeben werden. Auf diese Weise wird erreicht, daß, obwohl die Lichtsignale nun über den zweiten Anschluß 62 zugeführt werden und über den ersten Anschluß 61 abgeführt werden, die Lichtsignale verstärkt werden und an das optische Netzwerk 6 abgekoppelt werden. Somit wird auch bei Änderung der Datenübertragungsrichtung eine Abkopplung der Lichtsignale zum optischen Netzwerk 6 aufrechterhalten.

Figur 5 zeigt eine integrierte optische Schaltung 8, die einen siebten Schalter 48 aufweist, der als Zwei-mal-Zwei-Schalter ausgebildet ist. Die Figur 5 entspricht im wesentlichen der Figur 4, wobei jedoch anstelle der zwei Eins-mal-Zwei-Schalter und der zwei Zwei-mal-Eins-Schalter ein Zwei-mal-Zwei-Schalter 48 angeordnet ist. Ein erster Ein/Ausgang 78 des siebten Schalters 48 ist mit dem ersten Anschluß 61 verbunden. Ein zweiter Ein/Ausgang 79 des siebten Schalters 48 ist mit dem zweiten Anschluß 62 verbunden. Ein dritter Ein/Ausgang 80 des siebten Schalters 48 ist mit dem ersten Eingangslichtleiter 20 verbunden.

Ein vierter Ein/Ausgang 81 des siebten Schalters 48 ist mit dem ersten Ausgangslichtleiter 21 verbunden. Der Pumplaser 9 ist über den ersten Lichtleiter 10 und einen neunten gerichteten optischen Richtkoppler 37 an den ersten Eingangslichtleiter 20 angeschlossen. Der erste Eingangslichtleiter 20 ist über die erste Faser 12 mit dem ersten Ausgangslichtleiter 21 angeschlossen. Über einen elften gerichteten optischen Richtkoppler 39 und über eine fünfte Ausgangslichtleitung 33 ist eine Steuereinheit 15 mit dem ersten Ausgangslichtleiter 21 verbunden. Über einen zehnten Richtkoppler 38 ist über eine fünfte Ausgangsleitung 55 ein optisches Netzwerk 6 mit dem ersten Ausgangslichtleiter 21 verbunden. An den ersten und den zweiten Anschluß 61,62 sind optische Leitungen, insbesondere Ringleitungen, angeschlossen. Die optischen Leitungen sind schematisch in Form von Pfeilen dargestellt.

Die Anordnung nach Figur 5 funktioniert wie folgt:

In einem Anfangszustand werden über den ersten Anschluß 61 Lichtsignale an die integrierte optische Schaltung 8 geführt. Diese werden über den siebten Schalter 48 an den ersten Eingangslichtleiter 20 weitergegeben, mittels des Pumplasers 9 und der verstärkenden ersten Faser 12 verstärkt und über den ersten Ausgangslichtleiter 21 und den siebten Schalter 48 an den zweiten Anschluß 62 weitergegeben. Die verstärkten Lichtsignale werden über den zehnten optischen Richtkoppler 38 und die fünfte Ausgangsleitung 55 an das optische Netzwerk 6 geführt. Ergibt nun die Überwachung des Ausgangs der ersten Faser 12 in der Steuereinheit 15, daß kein Ausgangssignal abgegeben wird, so wird mittels des siebten Schalters 48 der erste Eingangslichtleiter 20 an den zweiten Anschluß 62 geschaltet und der erste Ausgangslichtleiter 21 an den ersten Anschluß 61 geschaltet. Auf diese Weise wird erreicht, daß, obwohl z.B. bei einer Leitungsunterbrechung einer Ringleitung eine Umkehr der Signalübertragungsrichtung vorgenommen wird, die Signale trotzdem in der vorgegebenen Richtung die erste verstärkende Faser 12 durchlaufen und an das optische Netzwerk 6 weitergegeben werden.

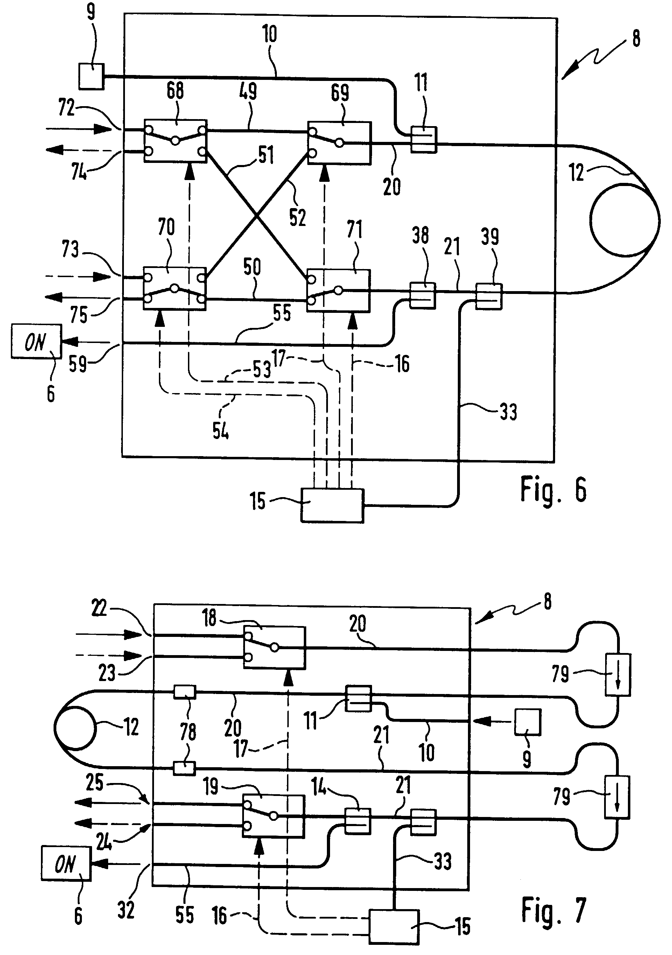

Die Figur 6 zeigt eine integrierte optische Schaltung 8, die zwei Zwei-mal-Zwei-Schalter 68, 70 und je nach Betriebsrichtung zwei Zwei-mal-Eins-Schalter oder zwei Eins-mal-Zwei-Schalter 69, 71 aufweist. Ein siebter Eingang 72 ist mit einem ersten Eingang eines achten Schalters 68 verbunden. Der achte Schalter 68 ist als Zwei-mal-Zwei-Schalter ausgebildet. Ein erster Ausgang des achten Schalters 68 ist über eine erste optische Verbindungsleitung 49 mit einem ersten Eingang eines neunten Schalters 69 verbunden. Der neunte Schalter 69 ist als Zwei-mal-Eins-Schalter ausgebildet. Ein Ausgang des neunten Schalters 69 ist mit dem ersten Eingangslichtleiter 20 verbunden.

Der erste Eingangslichtleiter 20 ist über eine erste verstärkende Faser 12 an einen ersten Ausgangslichtleiter 21 geführt, der an einen ersten Eingang eines elften Schalters 71 angeschlossen ist. Der elfte Schalter 71 ist als Ein-mal-Zwei-Schalter ausgebildet. Ein erster Ausgang des elften Schalters 71 ist über eine zweite optische Verbindungsleitung 50 mit einem ersten Eingang eines zehnten Schalters 70 verbunden. Der zehnte Schalter 70 ist als Zwei-mal-Zwei-Schalter ausgebildet. Ein erster Ausgang des zehnten Schalters 70 ist an einen neunten Ausgang 75 angeschlossen. Ein zweiter Eingang des zehnten Schalters 78 ist an einen achten Eingang 73 geführt. Ein zweiter Ausgang des achten Schalters 68 ist an einen achten Ausgang 74 angeschlossen. Ein zweiter Eingang des achten Schalters 68 ist über eine dritte optische Verbindungsleitung 51 mit einem zweiten Ausgang des elften Schalters 71 verbunden.

Ein zweiter Ausgang des zehnten Schalters 70 ist über eine vierte optische Verbindungsleitung 52 mit einem zweiten Eingang des neunten Schalters 69 verbunden. Ein Pumplaser 9 ist über einen ersten Lichtleiter 10 und über einen ersten gerichteten optischen Richtkoppler 11 an den ersten Eingangslichtleiter 20 angekoppelt. Eine Steuereinheit 15 ist über eine fünfte Ausgangslichtleitung 33 an einen elften optischen gerichteten Richtkoppler 39 angeschlossen, der an den ersten Ausgangslichtleiter 21 angekoppelt ist. Ein zehnter optischer Richtkoppler 38 ist an den ersten Ausgangslichtleiter 21 angekoppelt und über eine fünfte Ausgangsleitung 55 mit einem vierten Ausgang 59 verbunden, an den ein optisches Netzwerk 6 angeschlossen ist. Die Steuereinheit 15 ist über eine vierte Steuerleitung 54 mit dem zehnten Schalter 70, über eine dritte Steuerleitung 53 mit dem achten Schalter 68, über eine zweite Steuerleitung 17 mit dem neunten Schalter 69 und über eine erste Steuerleitung 16 mit dem elften Schalter 71 verbunden. An den siebten und achten Eingang 72,73 und an den achten und neunten Ausgang 74,75 sind optische Leitungen z.B. in Form von Ringleitungen angeschlossen.

Die Anordnung nach Figur 6 funktioniert wie folgt:

Ein Lichtsignal, das über den siebten Eingang 72 an die integrierte optische Schaltung 8 gegeben wird, wird über den achten Schalter 68 und den neunten Schalter 69 an den ersten Eingangslichtleiter 20 geführt. Das zugeführte Lichtsignal wird mit Hilfe der ersten verstärkenden Faser 12 und mit Hilfe des Pumplasers 9 verstärkt und über den elften Schalter 71 und den zehnten Schalter 70 an den neunten Ausgang 75 weitergegeben. Zugleich wird das von der ersten verstärkenden Faser 12 verstärkte Lichtsignal abgekoppelt und an das optische Netzwerk 6 weitergegeben.

Die Steuereinheit 15 überwacht das von der ersten verstärkenden Faser 12 abgegebene Lichtsignal. Wird nun bei Unterbrechung der Leitung das Lichtsignal über den achten Eingang 73 zugeführt, so stellt die Steuereinheit 15 fest, daß kein Lichtsignal am Ausgang der ersten verstärkenden Faser 12 vorliegt. Das am achten Eingang 73 anliegende Signal wird über die vierte optische Verbindungsleitung 52 an den zweiten Eingang des neunten Schalters 69 geführt. Die Steuereinheit 15 schaltet den neunten Schalter 69 so um, daß das am zweiten Eingang anliegende Lichtsignal an den ersten Eingangslichtleiter 20 weitergegeben wird. Vom ersten Einganglichtleiter 20 wird das zugeführte Lichtsignal über die erste Faser 12 an den Eingang des elften Schalters 71 weitergegeben. Der elfte Schalter 71 wird von der Steuereinheit 15 so umgeschaltet, daß das am Eingang anliegende Lichtsignal über den zweiten Ausgang und die dritte optische Verbindungsleitung 51 an den zweiten Eingang des achten Schalters 68 geführt wird.

Der achte Schalter 68 führt das am zweiten Eingang anliegende Lichtsignal über den zweiten Ausgang an den achten Ausgang 74. Zusätzlich wird das von der ersten verstärkenden Faser 12 ausgegebene Lichtsignal über den zehnten Richtkoppler 38 und die fünfte Ausgangsleitung 55 an den vierten Ausgang 59 ausgegeben, der mit dem optischen Netzwerk 6 verbunden ist. Auf diese Weise wird erreicht, daß eine Abkopplung der zugeführten Lichtsignale an das optische Netzwerk 6 erfolgt, obwohl anstelle des siebten Eingangs 72 der achte Eingang 73 und anstelle des neunten Ausgangs 75 der achte Ausgang 74 zur Datenübertragung verwendet werden.

Werden die Lichtsignale über den zehnten Ausgang 75 zugeführt, so erkennt die Steuereinheit 15, daß kein Ausgangssignal an der ersten verstärkenden Faser 12 anliegt. Daraufhin wird der zehnte Schalter 70 und der neunte Schalter 69 so umgeschaltet, daß das über den zehnten Ausgang 75 zugeführte Signal an den ersten Eingangslichtleiter 20 geführt wird. Zugleich wird der elfte Schalter 71 und der achte Schalter 68 so umgeschaltet, daß das vom ersten Ausgangslichtleiter 21 dem elften Schalter 71 zugeführte Signal über den siebten Eingang 72 ausgegeben wird. Weiterhin sind beliebige Kombinationen der Lichtsignalführung über den siebten, achten, neunten und zehnten Ausgang 72, 73, 74, 75 möglich, wobei die Steuereinheit 15 den achten Schalter 68, den neunten Schalter 69, den zehnten Schalter 70 und den elften Schalter 71 in der Weise umschaltet, daß eine Verstärkung des zugeführten Lichtsignals erfolgt und eine Abkopplung der verstärkten Lichtsignale an das optische Netzwerk 6 durchgeführt wird.

Figur 7 zeigt eine Schaltung 8 entsprechend der Figur 2, wobei jedoch vor der ersten Faser 12 ein Isolator 79 und nach der ersten Faser 12 ein weiterer Isolator 79 in den Signalgang geschaltet ist. Die Isolatoren 79 sind diskret ausgeführt und an die Schaltung 8 optisch gekoppelt. Die Isolatoren 79 sind für Licht nur in einer Richtung, die in Figur 7 in Form eines Pfeiles angedeutet ist, durchlässig. Auf diese Weise wird verhindert, daß sich Licht entgegen der vorgegebenen Betriebsrichtung des Faserverstärkers ausbreitet und die Funktionsweise des Lasers 9 und/oder die Funktionsweise der ersten Faser 12 beeinträchtigt.

Isolatoren sind bekannt und z.B. bei Fiber Optics Handbook ,2. Ausgabe, Hewlett Packard, 1988, S. 93 beschrieben. In einer Weiterbildung der Vorrichtung sind die verstärkenden Fasern als verstärkende Wellenleiter mit auf den Chip integriert. Ebenso sind die optischen Isolatoren direkt auf den Chip integriert. Die in den Figuren 2 bis 7 in die optische integrierte Schaltung 8 eingezeichneten Lichtleiter, Richtkoppler und Schalter stellen integrierte Bauelemente dar.

## Patentansprüche

1. Vorrichtung zum Beschalten mindestens einer verstärkenden Faser (12) mit wenigstens zwei optischen Leitungen, die über die verstärkende Faser (12) miteinander verbunden sind, wobei wenigstens ein optischer Richtkoppler (11;37) für den Anschluß eines Pumplasers (9) an die verstärkende Faser (12) angeschlossen ist, dadurch gekennzeichnet, daß der optische Richtkoppler (11;37) in einer integrierten optischen Schaltung (8) angeordnet ist, daß in der integrierten optischen Schaltung (8) Anschlüsse für die optischen Leitungen, für den Pumplaser (9) und für die verstärkende Faser (12) vorgesehen sind und daß die Anschlüsse über integrierte optische Leiter (22,23,20,21,25,24,10) miteinander verbunden sind.

2. Vorrichtung nach Anspruch 1, dadurch gekennzeichnet, daß ein erster Anschluß der ersten optischen Leitung über mindestens einen integrierten optischen Schalter (18,19;48;44,45,46,47;68,69,70,71) an den Anschluß eines ersten Endes der verstärkenden Faser (12) und ein zweiter Anschluß der zweiten Leitung an ein zweites Ende der verstärkenden Faser (12) angeschlossen sind und über den integrierten optischen Schalter (18,19;48;44,45,46,47;68,69,70,71) der erste Anschluß an das zweite Ende der Faser (12) und der zweite Anschluß an das erste Ende der Faser (12) umschaltbar ist.

3. Vorrichtung nach Anspruch 1, dadurch gekennzeichnet, daß zwei weitere Anschlüsse für zwei weitere optische Leitungen an der integrierten optischen Schaltung (8) vorgesehen sind, daß die zwei weiteren Anschlüsse über zwei integrierte optische Leitungen (30,29) an zwei Anschlüsse für eine weitere verstärkende Faser (76) angeschlossen sind, daß die Ankopplung des Pumplasers (9) an die verstärkenden Fasern (12,76) integriert ist, daß zwei integrierte optische Richtkoppler (34,35) an die Ausgänge der Fasern (12,76) angekoppelt sind, daß die Richtkoppler (34,35) mit einem integrierten Zwei-mal-Eins-Schalter (77) verbunden sind, daß ein Ausgang des Zwei-mal-Eins-Schalters (77) mit einer Ausgangsleitung (32) verbunden ist.

4. Vorrichtung nach Anspruch 2 und 3, dadurch gekennzeichnet, daß eine Überwachungseinrichtung (15) an die verstärkende Faser (12,76) angekoppelt ist, daß die Überwachungseinrichtung mit dem mindestens einen integrierten optischen Schalter (18,19;48;44,45,46,47;68,69,70,71) über mindestens eine Steuerleitung (16,17,53,54) verbunden ist, und daß die Ankopplung der Überwachungseinrichtung (15) in der integrierten optischen Schaltung (8) integriert ist.

5. Vorrichtung nach einem der Ansprüche 2 und 4, dadurch gekennzeichnet, daß als integrierter optischer Schalter ein Zwei-mal-Zwei-Schalter (48) integriert ist.

6. Vorrichtung nach einem der Ansprüche 2, 4 und 5, dadurch gekennzeichnet, daß vier Anschlüsse über einen integrierten Zwei-mal-Eins-Schalter (18) und einen integrierten Eins-mal-Zwei-Schalter (19) an die verstärkende Faser (12) angeschlossen sind.

7. Vorrichtung nach einem der Ansprüche 2, 4 und 5, dadurch gekennzeichnet, daß eine Ausgangsleitung (32; 55) über einen integrierten Richtkoppler (14;34,35;38) an den Ausgang der verstärkenden Faser (12,76) angeschlossen ist.

8. Vorrichtung nach einem der Ansprüche 2 und 4 bis 7, dadurch gekennzeichnet, daß ein Eingang eines ersten integrierten optischen Schalters (44), der als Ein-mal-Zwei-Schalter ausgebildet ist, mit einem ersten Anschluß (61) verbunden ist, daß ein Ausgang des ersten Schalters (44) mit einem ersten Eingang eines integrierten optischen zweiten Schalters (45), der als Zwei-mal-Eins-Schalter ausgebildet ist, verbunden ist, daß der Ausgang des zweiten Schalters (45) mit der verstärkenden ersten Faser (12) verbunden ist, daß ein zweiter Anschluß (62) mit einem Ausgang eines integrierten optischen dritten Schalters (46), der als Zwei-mal-Ein-Schalter ausgebildet ist, verbunden ist, daß ein erster Eingang des dritten Schalters (46) mit einem zweiten Eingang des zweiten Schalters (45) und ein zweiter Eingang des dritten Schalters (46) mit einem zweiten Ausgang eines integrierten optischen vierten Schalters (47), der als Ein-mal-Zwei Schalter ausgebildet ist, verbunden ist, daß ein zweiter Ausgang des ersten Schalters (44) mit dem ersten Ausgang des vierten Schalters (47) verbunden ist, daß ein Eingang des vierten Schalters (47) mit dem Ausgang der verstärkenden ersten Faser (12) verbunden ist, und daß der erste, der zweite, der dritte und der vierte Schalter (44,45,46,47) von der Überwachungseinheit (15) umschaltbar sind.

9. Vorrichtung nach einem der Ansprüche 2,4 und 7, dadurch gekennzeichnet, daß ein erster und ein zweiter Zwei-mal-Zwei-Schalter (68,70) angeordnet sind, und daß ein erster Anschluß (72) mit einem ersten Ein/Ausgang des ersten Zwei-mal-Zwei-Schalters (68) und ein zweiter Anschluß (74) mit einem zweiten Ein/Ausgang des ersten Zwei-mal-Zwei-Schalters (68) und ein dritter Anschluß (73) mit einem ersten Ein/Ausgang des zweiten Zwei-mal-Zwei-Schalters (70) und ein vierter Anschluß (75) mit einem zweiten Ein/Ausgang des zweiten Zwei-mal-Zwei-Schalters (70) verbunden sind, daß ein dritter Ein/Ausgang des ersten Zwei-mal-Zwei-Schalters (68) mit einem ersten Eingang eines Zwei-mal-Eins-Schalters (69) verbunden ist, daß ein Ausgang des ersten Zwei-mal-Eins-Schalters (69) mit einem Eingang der ersten verstärkenden Faser (12) verbunden ist, daß ein Ausgang der ersten Faser (12) mit einem Eingang eines Eins-mal-Zwei-Schalters (71) verbunden ist, daß ein erster Ausgang des Eins-mal-Zwei-Schalters (71) mit einem vierten Ein/Ausgang des ersten Zwei-mal-Zwei-Schalters (68) verbunden ist, daß ein zweiter Ausgang des Eins-mal-Zwei-Schalters (71) mit einem vierten Ein/Ausgang des zweiten Zwei-mal-Zwei-Schalters (70) verbunden ist, und daß ein dritter Ein/Ausgang des zweiten Zwei-mal-Zwei-Schalters (70) mit einem zweiten Eingang des Zwei-mal-Eins-Schalters (69) verbunden ist.

10. Vorrichtung nach einem der Ansprüche 2 bis 8, dadurch gekennzeichnet, daß Taper (78) zur Anpassung verschiedener Feldverteilungen in der integrierten optischen Schaltung (8) integriert sind.

11. Vorrichtung nach einem der Ansprüche 2 bis 9, dadurch gekennzeichnet, daß optische Isolatoren (79) vor und/oder nach den verstärkenden Fasern (12) in den Signalweg geschaltet sind, und daß die Isolatoren (79) diskret ausgebildet sind und an die integrierten optischen Schaltung (8) optisch angekoppelt sind.

12. Vorrichtung nach einem der Ansprüche 2 bis 10, dadurch gekennzeichnet, daß verstärkende Wellenleiter und/oder Isolatoren (79) in die integrierte optische Schaltung (8) integriert sind.

## Claims

1. Device for connecting at least one amplifying fibre (12) with at least two optical lines which are connected to one another via the amplifying fibre (12), at least one optical directional coupler (11;37) for connecting a pump laser (9) being connected to the amplifying fibre (12), characterized in that the optical directional coupler (11;37) is arranged in an integrated optical circuit (8), in that there are provided in the integrated optical circuit (8) terminals for the optical lines, for the pump laser (9) and for the amplifying fibre (12), and in that the terminals are connected to one another via integrated light guides (22,23,20,21,25,-24,10).

2. Device according to Claim 1, characterized in that a first terminal of the first optical line is connected via at least one integrated optical switch (18,19;48;44,45,46,47;68,69,70,71) to the terminal of a first end of the amplifying fibre (12), and a second terminal of the second line is connected to a second end of the amplifying fibre (12), and via the integrated optical switch (18,19;48;44,45,46,47;68,69,70,71) the first terminal can be switched over to the second end of the fibre (12) and the second terminal can be switched over to the first end of the fibre (12).

3. Device according to Claim 1, characterized in that two further terminals for two further optical lines are provided on the integrated optical circuit (8), in that the two further terminals are connected via two integrated optical lines (30, 29) to two terminals for a further amplifying fibre (76), in that the coupling of the pump laser (9) to the amplifying fibres (12,76) is integrated, in that two integrated optical directional couplers (34,35) are coupled to the outputs of the fibres (12,76), in that the directional couplers (34,35) are connected to an integrated two-times-one switch (77), and in that one output of the two-times-one switch (77) is connected to an output line (32).

4. Device according to Claims 2 and 3, characterized in that a monitoring device (15) is coupled to the amplifying fibre (12,76), in that the monitoring device is connected to the at least one integrated optical switch (18,19;48;44,45,46,47;68,69,70,71) via at least one control line (16,17,53,54), and in that the coupling of the monitoring device (15) is integrated in the integrated optical circuit (8).

5. Device according to one of Claims 2 and 4, characterized in that a two-times-two switch (48) is integrated as the integrated optical switch.

6. Device according to one of Claims 2, 4 and 5, characterized in that four terminals are connected to the amplifying fibre (12) via an integrated two-times-one switch (18) and an integrated one-times-two switch (19).

7. Device according to one of Claims 2, 4 and 5, characterized in that one output line (32;55) is connected via an integrated directional coupler (14;34,35;38) to the output of the amplifying fibre (12,76).

8. Device according to one of Claims 2 and 4 to 7, characterized in that one input of a first integrated optical switch (44), which is constructed as a one-times-two switch, is connected to a first terminal (61), in that one output of the first switch (44) is connected to a first input of an integrated optical second switch (45), which is constructed as a two-times-one switch, in that the output of the second switch (45) is connected to the amplifying first fibre (12), in that a second terminal (62) is connected to an output of an integrated optical third switch (46), which is constructed as a two-times-one switch, in that a first input of the third switch (46) is connected to a second input of the second switch (45) and a second input of the third switch (46) is connected to a second output of an integrated optical fourth switch (47), which is constructed as a one-times-two switch, in that a second output of the first switch (44) is connected to the first output of the fourth switch (47), in that one input of the fourth switch (47) is connected to the output of the amplifying first fibre (12), and in that the first, the second, the third and the fourth switches (44,45,46,47) can be switched over by the monitoring unit (15).

9. Device according to one of Claims 2,4 and 7, characterized in that a first and a second two-times-two switch (68,70) are arranged, and in that a first terminal (72) is connected to a first input/output of the first two-times-two switch (68) and a second terminal (74) is connected to a second input/output of the first two-times-two switch (68) and a third terminal (73) is connected to a first input/output of the second two-times-two switch (70) and a fourth terminal (75) is connected to a second input/output of the second two-times-two switch (70), in that a third input/output of the first two-times-two switch (68) is connected to a first input of a two-times-one switch (69), in that one output of the first two-times-one switch (69) is connected to one input of the first amplifying fibre (12), in that one output of the first fibre (12) is connected to one input of a one-times-two switch (71), in that a first output of the one-times-two switch (71) is connected to a fourth input/output of the first two-times-two switch (68), in that a second output of the one-times-two switch (71) is connected to a fourth input/output of the second two-times-two switch (70), and in that a third input/output of the second two-times-two switch (70) is connected to a second input of the two-times-one switch (69).

10. Device according to one of Claims 2 to 8, characterized in that tapers (78) for matching different field distributions are integrated in the integrated optical circuit (8).

11. Device according to one of Claims 2 to 9, characterized in that optical isolators (79) are connected upstream and/or downstream of the amplifying fibres (12) in the signal path, and in that the isolators (79) are constructed in a discrete fashion and are optically coupled to the integrated optical circuit (8).

12. Device according to one of Claims 2 to 10, characterized in that amplifying waveguides and/or isolators (79) are integrated in the integrated optical circuit (8).

## Revendications

1. Circuit pour commuter au moins une fibre amplificatrice (12) à au moins deux lignes optiques reliées par la fibre amplificatrice (12),
au moins un coupleur directionnel optique (11, 37) étant relié à la fibre amplificatrice (12) pour brancher un laser de pompage (9),
caractérisé en ce que
• le coupleur directionnel optique (11, 37) appartient à un circuit optique intégré (8),
• ce circuit optique intégré (8) comporte des branchements pour les lignes optiques, pour le laser de pompage (9) et pour la fibre amplificatrice (12), et
• les branchements sont reliés par des guides optiques intégrés (22, 23, 20, 21, 25, 24, 10).

2. Circuit selon la revendication 1,
caractérisé par
un premier branchement de la première ligne optique par au moins un commutateur optique intégré (18, 19 ; 48 ; 44, 45, 46, 47 ; 68, 69, 70, 71) sur le branchement d'une première extrémité de la fibre amplificatrice (12) et un second branchement de la seconde ligne sur une seconde extrémité de la fibre amplificatrice et par le commutateur optique intégré (18, 19 ; 48 ; 44, 45, 46, 47 ; 68, 69, 70, 71), le premier branchement peut être commuté sur la seconde extrémité de la fibre (12) et le second branchement peut être commuté sur la première extrémité de la fibre (12).

3. Circuit selon la revendication 1,
caractérisé en ce que
• deux autres branchements pour deux autres lignes optiques sont prévus sur le circuit optique intégré (8),
• les deux autres branchements sont reliés par deux lignes optiques intégrées (30, 29) à deux branchements d'une autre fibre amplificatrice (76),
• le couplage du laser de pompage (9) est intégré dans les fibres amplificatrices (12, 76),
• deux coupleurs directionnels optiques (34, 35), intégrés sont reliés aux sorties des fibres (12, 76),
• les coupleurs directionnels (34, 35) sont reliés à un commutateur intégré 2 X 1 (77),
• une sortie du commutateur 2 X 1 (77) est reliée à une ligne de sortie (32).

4. Circuit selon les revendications 1 et 2,
caractérisé en ce que
• une installation de surveillance (15) est couplée sur les fibres amplificatrices (12, 76),
• l'installation de surveillance est reliée à au moins un commutateur optique intégré (18, 19 ; 48 ; 44, 45, 46, 47 ; 68, 69, 70, 71) par au moins une ligne de commande (16, 17, 53, 54) et
• le couplage de l'installation de surveillance (15) est intégré au circuit optique intégré (8).

5. Circuit selon l'une des revendications 2 et 4,
caractérisé en ce que
le commutateur optique intégré est un commutateur 2 X 1 (48) intégré.

6. Circuit selon l'une des revendications 2, 4, 5,
caractérisé par
quatre branchements reliés par un commutateur 2 X 1 (18) intégré et un commutateur 1 X 2 (19), intégré, à la fibre amplificatrice (12).

7. Circuit selon l'une des revendications 2, 4, 5,
caractérisé en ce qu'
une ligne de sortie (32 ; 55) est reliée par un coupleur directionnel intégré (76, 34, 35 ; 38) à la sortie des fibres amplificatrices (12, 76).

8. Circuit selon l'une des revendications 2 et 4 à 7,
caractérisé en ce qu'
• une entrée d'un premier commutateur optique intégré (44) est un commutateur 1 X 2, relié à un premier branchement (61),
• une sortie du premier commutateur (44) est reliée à une première entrée d'un second commutateur optique (45) intégré en forme de commutateur 2 X 1,
• la sortie du second commutateur (45) est reliée à la première fibre amplificatrice (12),
• un second branchement (62) est relié à une sortie d'un troisième commutateur (46) optique intégré, réalisé par un commutateur 2 X 1,
• une première entrée du troisième commutateur (46) est reliée à une seconde entrée du second commutateur (45) et une seconde entrée du troisième commutateur (46) est reliée à une seconde sortie d'un quatrième commutateur optique (47) intégré réalisé par un commutateur 1 X 2,
• une seconde sortie du premier commutateur (44) est reliée à la première sortie du quatrième commutateur (47), une entrée du quatrième commutateur (47) est reliée à la sortie de la première fibre amplificatrice (12), et
• le premier, le second, le troisième et le quatrième commutateur (44, 45, 46, 47) peuvent être commutés par l'unité de surveillance (15).

9. Circuit selon l'une des revendications 2, 4 et 7,
caractérisé par
• un premier et un second commutateur 2 X 2 (68, 70),
• un premier branchement (72) est relié à une première entrée/sortie du premier commutateur 2 X 2 (68) et un second branchement (74) est relié à une seconde entrée/sortie du premier commutateur 2 X 2 (68) et un troisième branchement (73) est relié à une troisième entrée/sortie du second commutateur 2 X 2 (70) et un quatrième branchement (75) est relié à une seconde entrée/sortie du second commutateur 2 X 2 (70),
• une troisième entrée/sortie du premier commutateur 2 X 2 (68) est reliée à une première entrée d'un commutateur 2 X 1 (69),
• une sortie du premier commutateur 2 X 1 (69) est reliée à une entrée de la première fibre amplificatrice (12),
• une sortie de la première fibre (12) est reliée à une entrée d'un commutateur 1 X 2 (71),
• une première sortie du commutateur 1 X 2 (71) est reliée à une quatrième entrée/sortie du premier commutateur 2 X 2 (68),
• une seconde sortie du commutateur 1 X 2 (71) est reliée à une quatrième entrée/sortie du second commutateur 2 X 2 (70), et
• une troisième entrée/sortie du second commutateur 2 X 2 (70) est reliée à une seconde entrée du commutateur 2 X 1 (69).

10. Circuit selon l'une des revendications 2 à 8,
caractérisé en ce que
les transitions (78) sont intégrées dans le circuit optique intégré (8) pour l'adaptation à différentes distributions de champs.

11. Circuit selon l'une des revendications 2 à 9,
caractérisé en ce que
des isolateurs optiques (79) sont prévus en amont et/ou en aval des fibres (12) amplificatrices dans le chemin des signaux et les isolateurs (79) sont des composants discrets couplés optiquement au circuit optique intégré (8).

12. Circuit selon l'une des revendications 2 à 10,
caractérisé en ce que
les guides d'ondes amplificateurs et/ou les isolateurs (79) sont intégrés dans le circuit optique intégré (8).
